Europäisches Patentamt

European Patent Office

Office européen des brevets

(11) Veröffentlichungsnummer: **0 153 293**
A2

# (12) EUROPÄISCHE PATENTANMELDUNG

(21) Anmeldenummer: 85890008.7

(22) Anmeldetag: 15.01.85

(51) Int. Cl.⁴: **B 23 Q 7/04**, B 23 Q 7/10, B 65 G 37/02, B 65 D 19/38

(30) Priorität: 08.02.84 AT 404/84
06.07.84 AT 2173/84

(43) Veröffentlichungstag der Anmeldung: 28.08.85
Patentblatt 85/35

(84) Benannte Vertragsstaaten: BE CH DE FR GB IT LI LU NL SE

(71) Anmelder: VOEST-ALPINE Aktiengesellschaft, Muldenstrasse 5, A-4020 Linz (AT)

(72) Erfinder: Feichtl, Roland, Dipl. -Ing., Hillerstrasse 13, A-4033 Linz (AT)
Erfinder: Deisenhammer, Walter, Pestalozzigasse 9, A-4800 Attnang-Puchheim (AT)
Erfinder: Rennstich, Eugen, Dipl. -Ing., Fliederweg 4, D-7129 Güglingen (DE)
Erfinder: Ganglberger, Klaus, Dipl. -Ing., Werndlweg 11, A-4050 Traun (AT)

(74) Vertreter: Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)

(54) Anlage zum Beschicken wenigstens einer Werkzeugmaschine mit auf Paletten bereitgestellten Werkstücken.

(57) Mit Hilfe einer Be- und Entladevorrichtung (1) werden auf einer Werkzeugmaschine (2) zu bearbeitende Werkstükke (11) von Paletten (8) abgenommen und nach der Bearbeitung auf Paletten abgelegt.

Um die Handhabung der Paletten (8) zu vereinfachen und die Nebenzeiten zu verkürzen, ist eine Ablage (3) mit zwei Aufnahmen für einen Palettenstapel (4) zum Bereitstellen der zu bearbeitenden Werkstücke (11) einerseits und für einen Palettenstapel (5) zum Ablegen der bearbeiteten Werkstücke anderseits vorgesehen, wobei die Be- und Entladevorrichtung (1) als Hubförderer für den Transport der jeweils obersten, nach der Entnahme aller Werkstücke (11) leeren Palette (8) vom Stapel (4) für die zu bearbeitenden Werkstücke (11) auf den Stapel (5) für die bearbeiteten Werkstücke ausgebildet ist.

- 1 -

## Anlage zum Beschicken wenigstens einer Werkzeugmaschine mit auf Paletten bereitgestellten Werkstücken

Die Erfindung bezieht sich auf eine Anlage zum Beschicken wenigstens einer Werkzeugmaschine mit auf Paletten bereitgestellten Werkstücken, bestehed aus einer zwischen der Werkzeugmaschine und einer Ablage für die Paletten verfahrbaren Be- und Entladevorrichtung, die die zu bearbeitenden Werkstücke von den Paletten abnimmt und die bearbeiteten Werkstücke auf die Paletten ablegt.

Um die Handhabung sowohl der zu bearbeitenden als auch der bearbeiteten Werkstücke zu vereinfachen, ist es bekannt, für die Werkstücke stapelbare Paletten vorzusehen, auf denen die zu bearbeitenden Werkstücke für die Übernahme durch die Be- und Entladevorrichtung ausgerichtet angeordnet und die bearbeiteten Werkstücke abgelegt werden können. Die mit Werkstückrohlingen beladenen Paletten werden von einem Stapel einzeln zu einer Ablage gefördert, die üblicherweise als Koordinatentisch ausgebildet ist, so daß durch eine Verstellung der Palette auf dem Ablagetisch jeder der Werkstückrohlinge in eine bestimmte Übernahmestellung gebracht werden kann, in der er von der Be- und Entladevorrichtung ergriffen und der Werkzeugmaschine zugeführt wird. Nach der Bearbeitung wird das Werkstück an seinen Platz auf der Palette zurückgelegt und die Palette über den Koordinatentisch verstellt, bis der nächste Werkstückrohling von der Be- und Entladevorrichtung erfaßt werden kann. Nachteilig bei diesen bekannten Anlagen ist zunächst, daß für das Aufsetzen der beladenen Paletten auf den Koordinatentisch eine gesonderte Fördereinrichtung erforderlich ist. Außerdem muß eine vergleichsweise lange Nebenzeit durch das Verfahren der Paletten zwischen der Ablage eines bearbeiteten Werkstückes und der Aufnahme eines Werkstückrohlings in Kauf genommen werden.

Der Erfindung liegt somit die Aufgabe zugrunde, diese Mängel zu vermeiden und eine Vorrichtung der eingangs geschilderten Art so zu verbessern, daß mit einem möglichst geringen Aufwand die Handhabung der Paletten zur Übernahme der Werkstückrohlinge und zur Ablage der bearbeiteten Werkstücke durch die Be- und Entladevorrichtung unter Verkürzung der Nebenzeiten vereinfacht werden kann.

Die Erfindung löst die gestellte Aufgabe dadurch, daß die Ablage zwei Aufnahmen für einen Palettenstapel zum Bereitstellen der zu bearbeitenden Werkstücke einerseits und für einen Palettenstapel zum Ablegen der bearbeiteten Werkstücke anderseits aufweist und daß die Be- und Entladevorrichtung als Hubförderer für den Transport der jeweils obersten, nach der Entnahme aller Werkstücke leeren Palette vom Stapel für die zu bearbeitenden Werkstücke auf den Stapel für die bearbeiteten Werkstücke ausgebildet ist.

Durch das Vorsehen von zwei Aufnahmen für je einen Palettenstapel wird es möglich, Nebenzeiten zufolge einer Verschiebung der Paletten einzusparen, weil die bearbeiteten Werkstücke nicht mehr auf die Palette mit den Werkstückrohlingen zurückgelegt werden müssen. Die jeweils oberste Palette des Stapels für die zu bearbeitenden Werkstücke wird demnach Stück für Stück durch die Be- und Entladevorrichtung entladen, die die bearbeiteten Werkstücke auf die jeweils oberste Palette des Stapels für die bearbeiteten Werkstücke ablegt. Ist die oberste Palette mit den Werkstückrohlingen vollständig entladen, so kann sie mit Hilfe der Be- und Entladevorrichtung von ihrem Stapel abgehoben und auf den Stapel für die bearbeiteten Werkstücke aufgesetzt werden, weil das Gewicht der unbeladenen Palette in der Größenordnung der Werkstückgewichte liegt, für die die Be- und Entladevorrichtung ausgelegt ist. Damit wird eine gesonderte Fördereinrichtung für die einzelnen Paletten überflüssig.

Nach dem Absetzen der leeren Palette auf dem Stapel für die bearbeiteten Werkstücke können die Werkstückrohlinge der nachfolgenden Palette des Stapels für die zu bearbeitenden Werkstücke nacheinander der Werkzeugmaschine durch die Be- und Entladevorrichtung zugeführt und nach ihrer Bearbeitung auf die zunächst leere, oberste Palette des Stapels für die bearbeiteten Werkstücke abgelegt werden. Sind die Werkstücke aller Paletten bearbeitet, so wird der Stapel mit den bearbeiteten Werkstücken, beispielsweise mittels eines Hubstaplers, abtransportiert und ein neuer Stapel mit Werkstückrohlingen angefördert, wobei die unterste leere Palette des vorhergehenden Stapels mit den Werkstückrohlingen als erste Palette für den neuen Palettenstapel zum Ablegen der bearbeiteten Werkstücke dienen kann.

Entscheidend für ein Auskommen ohne zusätzliche Fördereinrichtung ist, daß die Be- und Entladevorrichtung als Hubförderer für die Paletten ausgebildet ist. Zu diesem Zweck kann die Be- und Entladevorrichtung einen Greifer für die Paletten aufweisen, der die jeweils leere Palette erfaßt. Ein solcher Greifer kann auf die Ausbildung der Paletten abgestimmt sein, so daß die zum lagerichtigen Absetzen der Paletten notwendige, formschlüssige Kupplung zwischen dem Greifer und den einzelnen Paletten stets sichergestellt ist. Ein auf die Palettenkonstruktion abgestimmter Greifer auf der Be- und Entladevorrichtung schränkt allerdings das Platzangebot für die Werkstückgreifer ein. Um diesbezüglich keine Behinderung in Kauf nehmen zu müssen, kann der Greifer für die Paletten durch einen Greifer für die Werkstücke auswechselbar sein, so daß die Be- und Entladevorrichtung jeweils an die zu erfüllende Aufgabe vorteilhaft angepaßt ist. Da das Auswechseln von Greifern automatisch erfolgen kann und lediglich nach dem Abarbeiten einer Palette erforderlich wird, werden durch das Auswechseln keine ins Gewicht fallenden Nebenzeiten verursacht.

Besonders einfache Verhältnisse ergeben sich, wenn der Greifer für die Paletten aus einem Greifer für die Werkstücke besteht und die Paletten einen Greifansatz für den Greifer aufweisen. Durch die Anpassung nicht des Greifers an die Paletten, sondern der Paletten an einen bestehenden Greifer werden gesonderte Greifer für die Paletten unnötig, was besonders vorteilhafte Bedingungen schafft. Die üblichen Greifer von Be- und Entladevorrichtungen für Werkzeugmaschinen weisen Greifbacken oder -finger auf. Besteht der Greifansatz der Paletten aus wenigstens einem im Bereich des Palettenschwerpunktes angeordneten Griffsteg, so kann jede Palette über den Greifer formschlüssig erfaßt werden, wobei wegen der Anordnung des Greifansatzes im Bereich des Palettenschwerpunktes höchstens geringfügige Gewichtsmomente auftreten können.

Damit die Paletten sowohl für Innen- als auch Außengreifer geeignet sind, können zwei mit Abstand voneinander angeordnete, parallele Griffstege vorgesehen werden, die von Außengreifern an ihren Außenseiten erfaßt werden, während Innengreifer zwischen den Griffstegen eingreifen.

Der Einsatz der Be- und Entladevorrichtung als Hubförderer für die Paletten ist jedoch nicht vom Vorhandensein eines Greifers für die Palette abhängig. So könnte auch eine vom Greifer für die Werkstücke erfaßbare Hubeinrichtung für die Paletten, beispielsweise eine Hubgabel, vorgesehen sein. Beim Einsatz einer solchen Hubeinrichtung brauchen weder die Be- und Entladevorrichtung noch die Paletten aufeinander abgestimmt zu werden, weil diese Abstimmung über die Hubeinrichtung erreicht wird.

Um bewegliche Greifer zum Erfassen der einzelnen Paletten vermeiden zu können, ohne das spielfreie Erfassen der Paletten zu gefährden, kann die Be- und Entladevorrichtung so ausgebildet werden, daß sie einen zumindest in der Arbeitsstellung vertikalen Hubarm aufweist, der an seinem unteren Ende einen sich von einem Hals konisch nach unten erweiternden Tragkopf für die Paletten bildet, daß die Paletten mit einer sich entsprechend der Konizität des Tragkopfes nach oben verjüngenden Aufnahmeöffnung und einer davon mit Abstand vorgesehenen Durchtrittsöffnung für den Tragkopf versehen sind und daß die Durchtrittsöffnung mit der Aufnahmeöffnung durch eine an den Durchmesser des Tragkopfhalses angepaßte Einführöffnung verbunden ist. Da nach dem Einführen des sich konisch nach unten erweiternden Tragkopfes in die an die Tragkopfform angepaßte Aufnahmeöffnung einer Palette dieser Tragkopf beim Abheben des Hubarmes formschlüssig und spielfrei in die Aufnahmeöffnung eingreift, kann die Palette mit Hilfe des Hubarmes durch die Be- und Entladevorrichtung vom Stapel für die zu bearbeitenden Werkstücke auf den Stapel für die bearbeiteten Werkstücke gefördert werden. Zum Einführen des Tragkopfes in die sich nach oben konisch verjüngende Aufnahmeöffnung ist allerdings eine durch eine Einführöffnung mit der Aufnahmeöffnung verbundene Durchtrittsöffnung erforderlich, durch die der Tragkopf nach unten hindurchgeführt werden kann, um ihn über die Einführöffnung seitlich in den Bereich der Aufnahmeöffnung zu bewegen. Bei dem anschließenden Anheben des Hubarmes erfolgt dann die formschlüssige Kupplung mit der Palette zwangsläufig. Der Hubarm bedarf daher keiner beweglichen Greiffinger od. dgl.

Um die Drehlage der Palette gegenüber der Achse des Tragkopfes nicht nur über die Reibungskräfte zwischen dem Tragkopf und der Wandung der Aufnahmeöffnung sicherzustellen, könnte der Tragkopf und die Aufnahmeöffnung der Palette im Querschnitt von der Kreisform abweichen. Die Herstellung von solchen von einem Rotationskörper abweichenden Konstruktionsteilen ist jedoch aufwendig, so daß es vorteilhaft ist, wenn der Tragkopf im Bereich seiner unteren Stirnfläche einen radialen Arm mit einem achsparallelen Sicherungszapfen trägt und wenn der Aufnahmeöffnung der Paletten eine Aufnahmeausnehmung für den Sicherungszapfen zugeordnet ist. Der beim Kuppeln des Tragkopfes mit der Palette in die Aufnahmeausnehmung eingreifende Sicherungszapfen legt die richtige Drehlage der Palette gegenüber dem Tragkopf formschlüssig fest, so daß der Tragkopf und die Aufnahmeöffnung der Palette Kegelform aufweisen können. Eine kegelförmige Aufnahmeausnehmung für den Sicherungszapfen ist dabei weder erforderlich noch erwünscht. Um das Einführen des Sicherungszapfens in eine zylindrische Aufnahmeausnehmung zu erleichtern, kann der Sicherungszapfen allerdings mit einem sich konisch verjüngenden Einführende versehen werden.

In der Zeichnung ist der Erfindungsgegenstand beispielsweise dargestellt. Es zeigen

Fig. 1 eine erfindungsgemäße Anlage zum Beschicken von Werkzeugmaschinen mit auf Paletten bereitgestellten Werkstücken in einer schematischen Seitenansicht,

Fig. 2 diese Anlage in Draufsicht,

Fig. 3 eine Palette für die Bereitstellung der Werkstücke in Draufsicht in einem größeren Maßstab,

Fig. 4 einen Schnitt nach der Linie IV-IV der Fig. 3 in einem größeren Maßstab,

Fig. 5 eine Palette mit einem Greifansatz für den Greifer einer Be- und Entladevorrichtung in einem vereinfachten Schnitt,

Fig. 6 einen mit der Palette formschlüssig gekuppelten Hubarm der Be- und Entladevorrichtung in einem schematischen Vertikalschnitt,

Fig. 7 diesen Hubarm in einem Schnitt nach der Linie VII-VII der Fig. 6 und

Fig. 8 einen Schnitt nach der Linie VIII-VIII der Fig. 7.

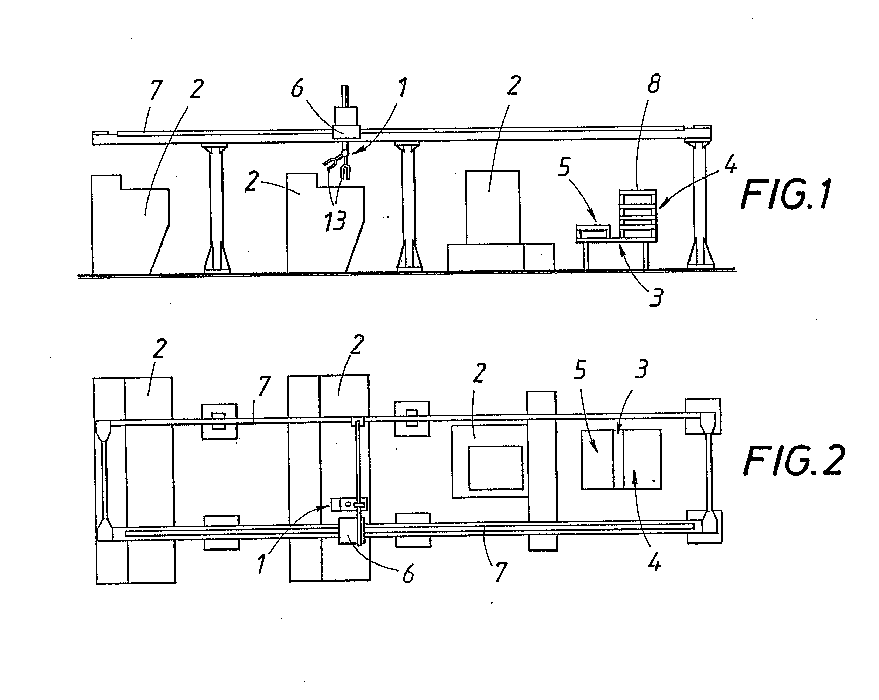

Wie den Fig. 1 und 2 zu entnehmen ist, besteht die erfindungsgemäße Anlage aus einer Be- und Entladevorrichtung 1 für drei Werkzeugmaschinen 2 und einer Ablage 3 für zwei Palettenstapel 4 und 5, für die je eine Aufnahme in der Ablage 3 vorgesehen ist. Die Be- und Entladevorrichtung 1 kann zwischen den Werkzeugmaschinen 2 und der Ablage 3 hin- und hergefahren werden. Zu diesem Zweck ist sie auf einem Portalschlitten 6 angeordnet, der entlang zweier Längsschienen 7 verschiebbar geführt ist. Da die Be- und Entladevorrichtung 1 auf dem Portalschlitten 6 quer zu den Schienen 7 verstellt werden kann, kann die Be- und Entladevorrichtung 1 innerhalb des durch die beiden Längsschienen 7 bestimmten Bereiches beliebig verfahren werden.

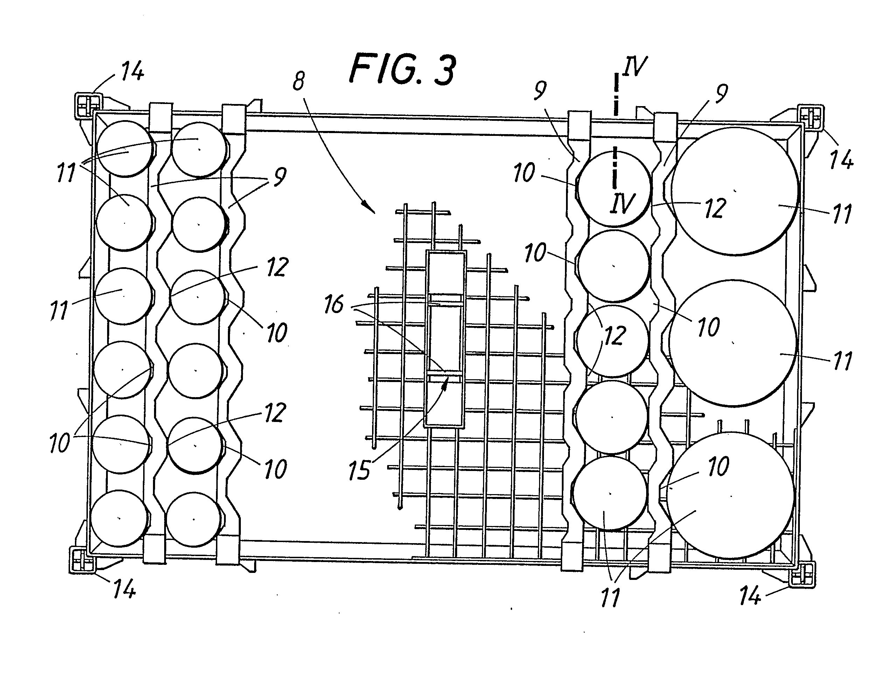

Die zu bearbeitenden Werkstücke werden auf stapelbaren Paletten 8 für die Übernahme durch die Be- und Entladevorrichtung 1 ausgerichtet angeordnet. Zu diesem Zweck sind gemäß Fig. 3 Richtleisten 9 vorgesehen, die stumpfwinkelige Ausnehmungen 10 für die Aufnahme und Zentrierung von kreiszylindrischen Werkstücken 11 aufweisen. Da diese Ausnehmungen 10 jeweils geraden Abschnitten 12 der benachbarten Richtleisten 9 gegenüberliegen, werden die Werkstücke 11 auf den Paletten 8 entsprechend ausgerichtet festgehalten und können durch die Be- und Entladevorrichtung 1 mit Hilfe von Greifern 13 erfaßt werden.

Die zu bearbeitenden Werkstücke 11 werden auf den Paletten 8 zwischen den verstellbaren und in ihrer jeweiligen Stellung festklemmbaren Richtleisten 9 angeordnet und die in dieser Weise beladenen Paletten zu einem Stapel 4 zusammengesetzt. Steckfüße 14, die in die hohlen Steckfüße der jeweils unteren Palette 8 des Stapels eingreifen, sorgen dabei für den Zusammenhalt der einzelnen Paletten. Der mit den zu bearbeitenden Werkstücken beladene Stapel 4 wird in die hiefür vorgesehene, aus Einsplateköffnungen für die Steckfüße 14 bestehende Aufnahme der Ablage 3 eingesetzt, so daß die bereitgestellten Werkstücke 11 nacheinander von der Be- und Entladevorrichtung 1 erfaßt und den Werkzeugmaschinen 2 zugeführt werden können. Nach der Bearbeitung der Werkstücke werden diese auf einer vorbereiteten, in die Aufnahme für den Stapel 3 der bearbeiteten Werkstücke eingesetzten leeren Palette abgelegt. Dieser Vorgang wiederholt sich, bis die oberste Palette 8 des Stapels 4 für die zu bearbeitenden Werkstücke vollständig entladen ist. Die entladene Palette 8 wird nunmehr auf die mit den bearbeiteten Werkstücken beladene Palette des Stapels für die bearbeiteten Werkstücke abgesetzt, und zwar mit Hilfe der Be- und Entladevorrichtung 1 als Hubförderer. Zu diesem Zweck weisen die Paletten 8 einen Greifansatz 15 auf, der gemäß Fig. 3 aus zwei parallelen, wenigstens im Bereich des Palettenschwerpunktes angeordneten Griffstegen 16 besteht. Diese Griffstege 16 können sowohl von einem Innengreifer als auch von einem Außengreifer erfaßt werden, so daß der Einsatz solcher Paletten von der Ausbildung der Greifer 13 der Be- und Entladevorrichtung 1 weitgehend unabhängig wird. Da die Griffstege 16 im Bereich des Schwerpunktes der Palette 8 liegen, treten keine größeren Gewichtsmomente beim Transport der leeren Paletten 8 durch die Be- und Entladevorrichtung auf, was besondere Maßnahmen zur Sicherung der formschlüssigen Kupplung zwischen der Be- und Entladevorrichtung 1 und der jeweiligen Palette 8 überflüssig macht.

Nach dem Absetzen der leeren Palette 8 des Stapels 4 auf dem Palettenstapel 5 werden die bereitgestellten Werkstücke der nächsten Palette des Stapels 4 zugänglich, wobei die auf den Stapel 5 umgesetzte, zunächst leere Palette zur Aufnahme der bearbeiteten Werkstücke bereitsteht. Sind alle Werkstücke des Stapels 4 durch ein aufeinanderfolgendes Abarbeiten der einzelnen Paletten 8 bearbeitet, so kann der mit den bearbeiteten Werkstücken beladene Palettenstapel 5 mittels eines Hubstaplers od. dgl. abtransportiert werden, um einen neuen Stapel mit zu bearbeitenden Werkstücken auf die Ablage 3 absetzen zu können.

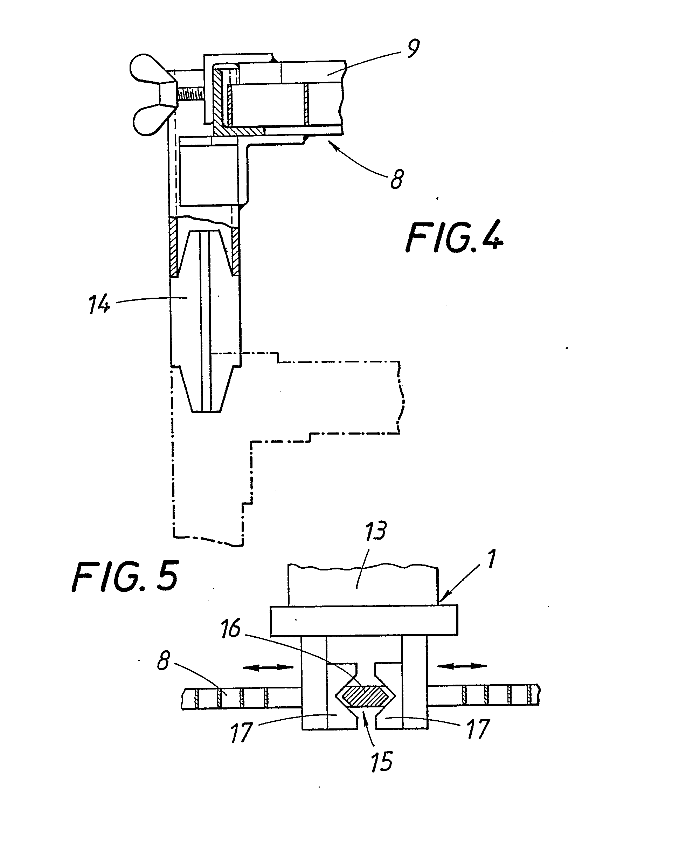

Gemäß der Fig. 5 besteht der Greifansatz 15 der Paletten 8 lediglich aus einem Griffsteg 16, so daß der Einsatz dieser Paletten auf Anlagen beschränkt bleibt, deren Be- und Entladevorrichtung nur Außengreifer aufweist. Die Greifbacken 17 dieser Greifer 13 erfassen den Griffsteg 16 der Paletten 8 beidseitig und fördern die Palette vom Stapel 4 zum Stapel 5, wobei die Steuerung der Be- und Entladevorrichtung einfach bleibt, weil nur die üblichen Bewegungen auszuführen sind, indem die Greifer 13 vertikal verstellt und die Be- und Entladevorrichtung auf dem Portalschlitten 6 und dieser entlang der Schienen 7 verfahren werden.

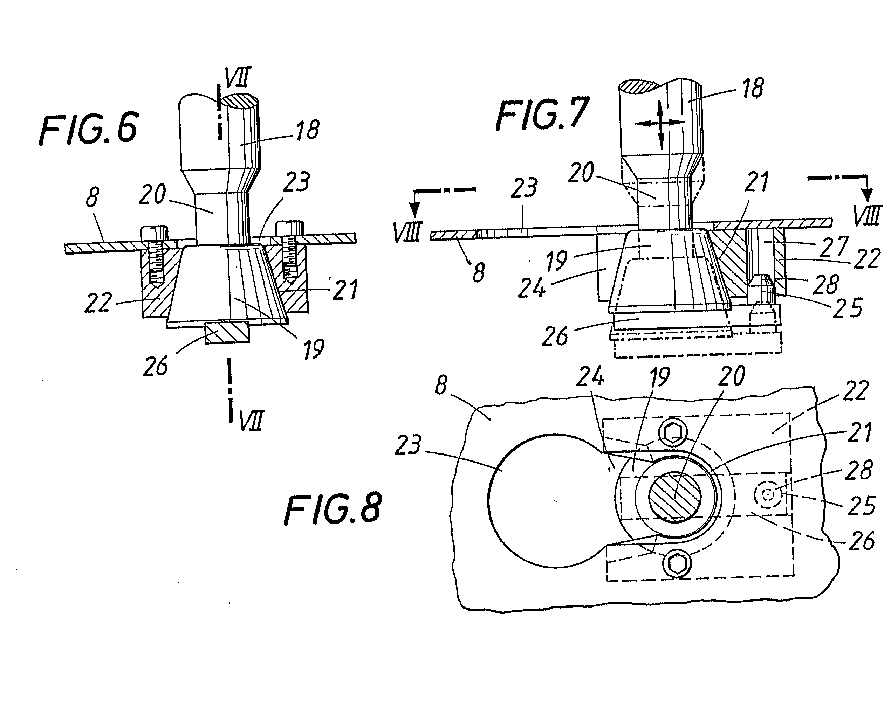

Nach den Fig. 6 bis 8 weist die Be- und Entladevorrichtung 1 einen Hubarm 18 mit einem sich konisch nach unten erweiternden Tragkopf 19 auf, der über einen Hals 20 am Hubarm 18 angesetzt ist und über die Be- und Entladevorrichtung in vertikaler und horizontaler Richtung bewegt werden kann. Zur Aufnahme des Tragkopfes 19 ist in jeder Palette 8 eine sich entsprechend der Konizität des Tragkopfes konisch nach oben verjüngende Aufnahmeöffnung 21 vorgesehen, die durch einen im Bereich des Palettenschwerpunktes auf der Palettenunterseite angebrachten Tragkörper 22 gebildet wird. Da der Tragkopf 19 in die Aufnahmeöffnung 21 nur von unten eingeführt werden kann, muß der Tragkopf 19 zunächst durch eine gegenüber der Aufnahmeöffnung 21 örtlich versetzte Durchtrittsöffnung 23 in der Palette 8 durchgesteckt werden, um durch eine die Durchtrittsöffnung 23 mit der Aufnahmeöffnung 21 verbindende Einführöffnung 24 in den Bereich der Aufnahmeöffnung 21 zu gelangen. Liegt der Tragkopf 19 im Bereich der Aufnahmeöffnung 21, wie dies in Fig. 7 strichpunktiert angedeutet ist, so kann durch ein Anheben des Tragkopfes 19 dieser in die Aufnahmeöffnung 21 der Palette 8 formschlüssig eingreifen, um die Palette mittels des Hubarmes 18 vom Stapel 4 zum Stapel 5 zu fördern.

Zur Lagesicherung der Palette 8 gegenüber dem Hubarm 18 ist ein Sicherungszapfen 25 vorgesehen, der an einem radialen, im Bereich der unteren Stirnfläche des Tragkopfes 19 an diesem befestigten Arm 26 angeordnet ist und beim Kuppeln des Tragkopfes 19 mit der Palette 8 in eine zylindrische Aufnahmeausnehmung 27 im Tragkörper 22 eingreift. Über den Sicherungszapfen 25 wird somit die Palette 8 drehfest gegenüber dem Tragkopf 19 gehalten. Damit das Einführen des Sicherungszapfens 25 in seine Aufnahmeausnehmung 27 erleichtert wird, kann der Sicherungszapfen 25 ein sich konisch verjüngendes Einführende 28 aufweisen.

— 10 —

Patentansprüche:

1. Anlage zum Beschicken wenigstens einer Werkzeugmaschine (2) mit auf Paletten (8) bereitgestellten Werkstücken (11), bestehend aus einer zwischen der Werkzeugmaschine (2) und einer Ablage (3) für die Paletten (8)
verfahrbaren Be- und Entladevorrichtung (1), die die zu
bearbeitenden Werkstücke (11) von den Paletten (8) abnimmt
und die bearbeiteten Werkstücke (11) auf die Paletten (8)
ablegt, dadurch gekennzeichnet, daß die Ablage (3) zwei
Aufnahmen für einen Palettenstapel (4) zum Bereitstellen der
zu bearbeitenden Werkstücke (11) einerseits und für einen
Palettenstapel (5) zum Ablegen der bearbeiteten Werkstücke
(11) anderseits aufweist und daß die Be- und Entladevorrichtung (1) als Hubförderer für den Transport der jeweils
obersten, nach der Entnahme aller Werkstücke (11) leeren
Palette (8) vom Stapel (4) für die zu bearbeitenden Werkstücke (11) auf den Stapel (5) für die bearbeiteten Werkstücke ausgebildet ist.

2. Anlage nach Anspruch 1, dadurch gekennzeichnet, daß die
Be- und Entladevorrichtung (1) einen Greifer für die
Paletten (8) aufweist.

3. Anlage nach Anspruch 2, dadurch gekennzeichnet, daß der
Greifer für die Paletten (8) durch einen Greifer (13) für
die Werkstücke (11) auswechselbar ist.

4. Anlage nach Anspruch 2, dadurch gekennzeichnet, daß der
Greifer für die Paletten (8) aus einem Greifer (13) für die
Werkstücke (11) besteht und daß die Paletten (8) einen
Greifansatz (15) für den Greifer (13) aufweisen.

5. Anlage nach Anspruch 4, dadurch gekennzeichnet, daß der
Greifansatz (15) aus wenigstens einem im Bereich des
Palettenschwerpunktes angeordneten Griffsteg (16) besteht.

6. Anlage nach Anspruch 5, dadurch gekennzeichnet, daß
zwei mit Abstand voneinander angeordnete, parallele Griff-

0153293

- 11 -

stege (16) vorgesehen sind.

7. Anlage nach Anspruch 1, wobei die Be- und Entladevorrichtung wenigstens einen Greifer (13) für die Werkstücke
(11) aufweist, dadurch gekennzeichnet, daß eine vom Greifer
(13) der Be- und Entladevorrichtung (1) erfaßbare Hubeinrichtung für die Paletten (8), beispielsweise eine Hubgabel, vorgesehen ist.

8. Anlage nach Anspruch 1, dadurch gekennzeichnet, daß die
Be- und Entladevorrichtung 1 einen zumindest in der Arbeitsstellung vertikalen Hubarm (18) aufweist, der an seinem
unteren Ende einen sich von einem Hals (20) konisch nach
unten erweiternden Tragkopf (19) für die Paletten (8)
bildet, daß die Paletten (8) mit einer sich entsprechend der
Konizität des Tragkopfes (19) nach oben verjüngenden Aufnahmeöffnung (21) und einer davon mit Abstand vorgesehenen
Durchtrittsöffnung (23) für den Tragkopf (19) versehen sind
und daß die Durchtrittsöffnung (23) mit der Aufnahmeöffnung
(21) durch eine an den Durchmesser des Tragkopfhalses (20)
angepaßte Einführöffnung (24) verbunden ist.

9. Anlage nach Anspruch 8, dadurch gekennzeichnet, daß der
Tragkopf (19) im Bereich seiner unteren Stirnfläche einen
radialen Arm (26) mit einem achsparallelen Sicherungszapfen
(25) trägt und daß der Aufnahmeöffnung (21) der Paletten (8)
eine Aufnahmeausnehmung (27) für den Sicherungszapfen (25)
zugeordnet ist.

10. Anlage nach Anspruch 9, dadurch gekennzeichnet, daß der
Sicherungszapfen (25) ein sich konisch verjüngendes Einführende (28) aufweist.

FIG.1

FIG.2

# FIG. 3

*9*

*8*

**FIG.4**

*14*

**FIG.5**

*13*

*1*

*16*

*8*

*17*

*17*

*15*

FIG.6

FIG.7

FIG.8

0153293